# EUROPÄISCHE PATENTSCHRIFT

(11) **EP 3 464 862 B1**
(45) Veröffentlichungstag und Bekanntmachung des Hinweises auf die Patenterteilung: **13.01.2021**
(21) Anmeldenummer: 17729045.9
(22) Anmeldetag: 29.05.2017
(51) Int. Cl.: F02M 26/48, F02D 11/10, F02D 41/24, F02D 9/10, F02M 26/54, G01D 5/244

(54) **VERFAHREN UND VORRICHTUNG ZUR KALIBRIERUNG EINES STELLGEBERSYSTEMS**
METHOD AND APPARATUS FOR CALIBRATING AN ACTUATOR SYSTEM
PROCÉDÉ ET DISPOSITIF D'ÉTALONNAGE D'UN SYSTÈME D'ACTIONNEUR

(30) Priorität: 31.05.2016 DE 102016209366
(43) Veröffentlichungstag der Anmeldung: 10.04.2019
(73) Patentinhaber: Robert Bosch GmbH, 70442 Stuttgart (DE)
(72) Erfinder: DIEROLF, Simon, 73230 Kirchheim/Teck (DE); SIEBER, Udo, 74321 Bietigheim (DE); MAUK, Tobias, 70195 Stuttgart (DE)
(86) Internationale Anmeldenummer: PCT/EP2017/062840
(87) Internationale Veröffentlichungsnummer: WO 2017/207459

(56) Entgegenhaltungen:
- EP-A2- 2 128 408
- DE-A1-102010 063 326
- DE-A1-102013 209 624
- DE-B3-102015 205 772
- US-A1- 2011 001 444

## Beschreibung

### Stand der Technik

Die Erfindung betrifft ein Verfahren und eine Vorrichtung zur Kalibrierung eines Stellgebersystems.

Stellgeber, insbesondere solche in Kraftfahrzeugen, umfassen einen bürstenlosen Elektromotor, ein Getriebe und ein Stellglied, dessen Lage durch einen Elektromotor und über das Getriebe eigestellt wird, und einen Sensor zur Ermittlung einer Position des Stellgebers bzw. des Stellglieds. Ein Beispiel für einen derartigen Stellgeber ist ein Drosselklappensteller. Auch andere Aktuatoren, wie beispielsweise Steller zur Betätigung elektronisch gesteuerter Kupplungen umfassen derartige Stellgeber.

Durch den Sensor wird zum einen die korrekte Position des Stellglieds überprüft. Dadurch wird überwacht, dass die angesteuerte Position des Stellgebers auch der tatsächlichen Stellposition des Stellglieds entspricht. Andererseits wird mithilfe der durch den Sensor erfassten Istposition eine Positionsregelung des Stellglieds durchgeführt, indem die gemessene Istposition im Vergleich zu einer vorgegebenen Sollposition geregelt wird.

Bürstenlose Elektromotoren sind elektronisch kommutiert und erfordern daher eine externe Kommutierung. Einer Lage eines Stellglieds entspricht dabei ein Drehwinkel eines Raumzeigers. Vom Raumzeiger hängt die aktuelle Rotorlage ab. Dazu ist eine Kenntnis der Rotorlage des Elektromotors erforderlich ist. Ein Verfahren zum Betreiben eines Stellgebers mit einem bürstenlosen Elektromotor ist aus DE 10 2010 063 326 A1 bekannt.

Zum sicheren Betrieb des Motors ist dabei eine Grundadaption oder Kalibrierung erforderlich, die aus dem Stand der Technik bekannt ist. Bei dieser Grundadaption oder. Kalibrierung wird die Rotorlage des Motors festgestellt, so dass anschließend die Kommutierung des Motors zuverlässig funktioniert. Dazu wird beispielsweise in bekannter Weise das Stellglied zwischen zwei Positionen oder Stellungen verfahren und es werden zu definierten Zeitpunkten Datenpaare aus der erfassten Stellgliedsposition und dem zu diesem Zeitpunkt angelegten Raumzeiger für die Kommutierung des Stators des Motors bestimmt. Dieser Durchlauf kann beispielsweise auch zweimal oder allgemein mehrfach wiederholt werden, beispielsweise mit unterschiedlichen Amplituden des Raumzeigers, woraus sich dann unterschiedliche Schleppwinkel zwischen der Raumzeigerposition und der Rotorlage ergeben. Durch eine modellbasierte Berechnung oder aufgrund von mathematischen Zusammenhängen, wie sie beispielsweise in der DE 10 2010 063 326 A1 beschrieben sind, kann dann die Rotorlage des Motors bestimmt werden.

Mit anderen Worten wird durch das Erfassen von Raumzeigerpositionen und den zugehörigen Ist-Positionen des Stellglieds unter der Verwendung von Prämissen für verschiedene Positionen des Raumzeigers oder des Stellglieds auf die Rotorlage geschlossen. Daraus kann dann ein Kennfeld oder eine Kennlinie erhalten oder erstellt werden, indem beispielsweise für Ist-Positionen des Stellglieds die zugehörige Rotorlage hinterlegt ist beziehungsweise die diesen Zusammenhang abbildet. Nach der Grundadaption kann somit für den Betrieb des Motors, d.h. für seine Kommutierung, aus den Werten der Ist-Position des Stellglieds mithilfe des Kennfelds bzw. der Kennlinie auf die Rotorlage geschlossen werden und der für die Erreichung eines Sollwertes des Stellglieds erforderliche Raumzeiger am Stator eingestellt werden.

Aus der DE 10 2010 063 326 A1 sind ein Verfahren und eine Vorrichtung zum Betreiben eines Stellgebers mit einem bürstenlosen Elektromotor bekannt.

### Offenbarung der Erfindung

Derartige Verfahren zur Grundadaption oder Kalibrierung werden beispielsweise bei Drosselklappen oder ähnlichen Stellern eingesetzt. In der Praxis steht für die Grundadaption nur ein sehr geringes Zeitbudget zur Verfügung. Das bedeutet, dass der Durchlauf für die Grundadaption in sehr kurzer Zeit, beispielsweise weniger als 3 Sekunden, abgeschlossen sein muss. Durch den schnellen Durchlauf werden Schwingungen des Stellglieds angeregt, beispielsweise durch
Motorrippel. Diese Schwingungen sind beispielsweise durch die Motorcharakteristik vorgegeben. Dabei kann der Motor vereinfacht betrachtet als eine Kreisbahn angesehen werden, auf der "Unebenheiten" vorhanden sind. Diese "Unebenheiten" sind räumlich betrachtet in einem festen Abstand zueinander angeordnet. Beim Durchlaufen der Kreisbahn, d.h. beim Rotieren des Raumzeigers und des Rotors werden nun diese "Unebenheiten" passiert und der Motor wird zu Schwingungen angeregt, die sich auf das Stellglied übertragen. Wenn die Kreisbahn mit der doppelten Geschwindigkeit durchfahren wird, so halbiert sich das Zeitintervall, in dem die "Unebenheiten" überfahren werden. Somit verdoppelt sich dann auch die Frequenz der Schwingung.

Diese Schwingungen sind dabei so zu verstehen, dass der Rotor und damit das Stellglied um den Sollwert vorauseilt oder zurückliegt, also die Ist-Position des Stellglieds, außer in Schwingungsknoten, nicht mit dem schwingungsfreien Zustand übereinstimmen muss. Es kann dabei vorkommen, dass die Schwingungen umso stärker ausfallen, also umso höhere Amplituden aufweisen, je schneller der Motor dreht, je höher also die Frequenz des Raumzeigers ist.

Aufgrund des begrenzten Zeitbudgets für die Kalibrierung kann bei der Erfassung der Datenpaare nicht auf das Abklingen der Schwingungen gewartet werden und es kann nicht mit einer ausreichend langsamen Geschwindigkeit gefahren werden, um die Amplitude der Schwingungen klein zu halten. Vielmehr kann in der Praxis der Bedarf bestehen, eine hohe Verfahrgeschwindigkeit oder Drehgeschwindigkeit des Motors zu wählen. Dadurch kann es passieren, dass in den zu verschiedenen Zeitpunkten erfassten Datenpaaren aus Raumzeiger, Raumzeigerwinkel und Stellgliedposition, nicht die eigentliche Ideallinie erfasst wird, sondern, dass beispielsweise die Stellgliedpositionen durch die auf die Ideallinie aufgeprägten Schwingungen verfälscht sind. Mit anderen Worten kann der erfasste Wert der Stellgliedposition zu groß oder zu klein sein verglichen mit dem Idealwert, der sich bei abgeklungener Schwingung ergeben hätte. Dadurch kann die Grundadaption oder Kalibrierung verfälscht werden.

Es ist daher Aufgabe der vorliegenden Erfindung, ein Kalibrierverfahren und Kalibriersystem bzw. Grundadaptionsverfahren und Grundadaptionssystem für einen Stellgeber mit einem elektronisch kommutierten Elektromotor vorzusehen, das in kurzer Zeit abgeschlossen werden kann und durch das dennoch eine Kennlinie oder ein Kennfeld mit hoher Genauigkeit bestimmt werden kann, durch das also obiger Nachteil vermeidbar ist.

Diese Aufgabe wird durch das Verfahren nach Anspruch 1 sowie durch die Vorrichtung und das Computerprogrammprodukt gemäß den nebengeordneten Ansprüchen gelöst.

Grundgedanke der Erfindung ist es dabei, ein Verfahren zur Grundadaption, Kalibrierung oder zur Unterstützung der Kalibrierung bereitzustellen, durch welches die Grundadaption oder Kalibrierung in sehr kurzer Zeit durchgeführt werden kann und bei dem gleichzeitig die Genauigkeit der für die Grundadaption oder Kalibrierung benötigten Datenwerte verbessert wird, indem der Einfluss von Schwingungen des Systems reduziert wird.

Dazu ist ein Verfahren für ein Stellgebersystem, das einen bürstenlosen Elektromotor zur Beeinflussung einer Lage eines Stellglieds umfasst, vorgesehen, bei dem mindestens zwei Werte einer Ausgangsgröße eines Sensors zur Bestimmung einer Position des Stellglieds erfasst werden, eine Information über die Position des Stellglieds abhängig von den mindestens zwei erfassten Werten ermittelt wird, die ermittelte Information über die Position des Stellglieds einer Information über eine Rotorlage des Elektromotors zugeordnet wird, wobei die mindestens zwei erfassten Werte zu zwei verschiedenen Zeitpunkten in einem vorgegebenen Zeitintervall erfasst werden, und wobei eine Dauer des vorgegeben Zeitintervalls abhängig von einer Charakteristik des Elektromotors bestimmt ist.

Das vorgeschlagene Verfahren weist den Vorteil auf, dass Stützstellen, die zu fixen Zeitpunkten ermittelt werden, ersetzt werden durch Stützstellen, die sich aus wenigstens zwei Werten in einem Zeitintervall ergeben, welches den ersetzten Zeitpunkt umfasst. Mindestens zwei Werte und mindestens zwei erfasste Werte bedeutet auch, dass deutlich mehr als zwei dieser Werte verwendet werden können. Dies erhöht die Genauigkeit. Dabei entspricht ein Zeitpunkt bei der Grundadaption einem Drehwinkelwert eines Raumzeigers, der mit einer bekannten Winkelgeschwindigkeit rotiert. Die Beschreibung im Zeitraum dient lediglich der besseren Verständlichkeit. Beispielsweise wird der ursprünglich im Zeitpunkt 500ms ermittelte Positionswert eines Stellglieds ersetzt durch einen Wert, der sich aus mehreren Positionen des Stellglieds ergibt, die sich in einem Zeitintervall z.B. von 470ms bis 530ms ergeben. Beispielsweise werden 6 Positionen des Stellglieds zu den Zeitpunkten 475ms, 485ms, 495ms, 505ms, 515ms und 525ms ermittelt. Diese 6 Positionswerte werden z.B. arithmetisch gemittelt einem Mittelwert zugeordnet. Dieser Mittelwert wird dann als Stellgliedsposition der Stützstelle für 500ms zugeordnet. Die Intervallbreite (hier 60ms) wird dabei beispielsweise vorgegeben durch die Wellenlänge der dominanten Harmonischen der aufgeprägten Schwingung, so dass eine komplette Wellenlänge der dominanten Harmonischen durch das Zeitintervall "abgetastet" wird. Durch diese Bestimmung des Positionswertes des Stellglieds aus mindestens zwei Werten innerhalb des Zeitintervalls wird das Ausmaß der Abweichung von der schwingungsfreien Ideallinie verringert.

Die Minderung des Ausmaßes der Schwingung erfolgt dadurch, dass sich bei der Schwingung positive Werte und negative Werte innerhalb einer Wellenlänge kompensieren. Vorzugsweise sind daher die erfassten wenigstens zwei Werte zumindest annähernd gleichmäßig über das Zeitintervall verteilt.

Die Ideallinie kann beispielsweise in einem Koordinatensystem dargestellt werden, in welchem auf der X-Achse die Zeit, und damit der Drehwinkel des Raumzeigers dargestellt wird, mit welchem der Stator des Motors kommutiert wird, wodurch der Rotor dem erzeugten Magnetfeld des Stators folgt. Auf der Y-Achse wird dann die vom Sensor erfasste Position des Stellglieds bzw. des Getriebes dargestellt. In einem ideal schwingungsfreien System kann sich dann eine "glatte" Kurve ergeben. Werden dagegen durch z.B. Motorrippel Schwingungen auf das System aufgeprägt, so sind diese Schwingungen der Ideallinie überlagert.

Vorzugsweise wird zur Bestimmung des Positionswertes des Stellglieds eine Vielzahl von Positionswerten innerhalb des Zeitintervalls herangezogen. Besonders bevorzugt werden zumindest 5 Positionswerte innerhalb des Zeitintervalls bestimmt bzw. erfasst. Besonders bevorzugt sind die Positionswerte innerhalb des Zeitintervalls zumindest annähernd gleichmäßig verteilt, d.h. äquidistant beabstandet.

Vorteilhafterweise wird der Elektromotor in einem ersten Betriebszustand des Elektromotors zur Bewegung des Stellglieds mit einer vorgegebenen ersten Geschwindigkeit und in einem zweiten Betriebszustand des Elektromotors zur Bewegung des Stellglieds mit einer vorgegebenen zweiten Geschwindigkeit angesteuert, wobei die vorgegebene erste Geschwindigkeit höher ist als die vorgegebene zweite Geschwindigkeit, und der Elektromotor abhängig von der Information über die Position des Stellglieds zum Betrieb im ersten Betriebszustand oder im zweiten Betriebszustand angesteuert wird. Bei der Geschwindigkeit handelt es sich um die Winkelgeschwindigkeit, mit der der Rotor oder der Raumzeiger bewegt wird. Bei größerer Geschwindigkeit werden dabei größere Motorrippel erzeugt als bei kleinerer Geschwindigkeit. Je nach Position des Stellglieds kann durch die zwei Betriebszustände eine passende Geschwindigkeit eingestellt werden, durch die eine für die Kalibrierung erforderliche Genauigkeit erzielt wird. Die unterschiedlichen Geschwindigkeiten erlauben somit eine Anpassung der Ansteuerung an die Erfordernisse der Kalibrierung.

Vorteilhafterweise wird die Information über die Position des Stellglieds in mindestens einem vorgegebenen Zeitintervall durch eine Mittelwertbildung über mehrere Messwerte ermittelt, die in dem mindestens einen vorgegebenen Zeitintervall gemessen wurden. Dadurch wird der Fehler verkleinert und die Kalibrierung verbessert.

Erfindungsgemäß hängt die Dauer des Zeitintervalls ab von der Wellenlänge einer beim Ansteuern des Rotors auftretenden periodisch um den idealen Verlauf oszillierenden Schwingung. Dadurch wird als die Charakteristik des Elektromotors der Einfluss des Motorrippels berücksichtigt.

Vorteilhafterweise wird der Rotor mit gleichförmiger Winkelgeschwindigkeit angesteuert. Dadurch ist die Winkelgeschwindigkeit konstant. Dies vereinfacht die Kalibrierung.

Vorteilhafterweise ist durch die Ansteuerung des Elektromotors eine Lage des Stellglieds einstellbar, wobei die Lage des Stellglieds im ersten Betriebszustand des Elektromotors in einem ersten Bereich verändert wird, der durch einen vorgegebenen ersten Anschlag für das Stellglied und eine davon verschiedene vorgegebenen erste Lage des Stellglieds begrenzt ist. Ein Anschlag ist beispielsweise eine maximale Auslenkung des Stellglieds aus einer Ruhelage, die der vorgegebenen ersten Lage entspricht.

Vorteilhafterweise sind, während die Lage im ersten Bereich verändert wird, in mindestens 50%, insbesondere mindestens 60%, des ersten Bereichs Zeitpunkte zur Erfassung von Messwerten durch den Sensor vorgesehen. Dadurch werden beispielsweise die Störeffekte in einem ausreichend großen Bereich zwischen Anschlag und Ruhelage des Stellglieds verringert.

Vorteilhafterweise wird die Lage des Stellglieds im zweiten Betriebszustand des Elektromotors in einem zweiten Bereich verändert, der durch einen vorgegebenen zweiten Anschlag für das Stellglied und die davon verschiedene vorgegebene erste Lage des Stellglieds begrenzt ist. Dadurch wird ein vom ersten Bereich verschiedener zweiter Bereich bis zu einer zweiten maximalen Auslenkung des Stellglieds berücksichtigt.

Der erste Bereich und der zweite Bereich werden mit voneinander verschiedener Geschwindigkeit durchfahren. Dadurch kann auf die Besonderheiten bezüglich Genauigkeit und Zeitbudget Rücksicht genommen werden. Insbesondere kann somit die Kalibrierung in einem der Bereiche mit hoher Geschwindigkeit bei ausreichend hoher Genauigkeit und im anderen der Bereiche bei hoher Genauigkeit und für das gesamte Zeitbudget ausreichend hoher Geschwindigkeit durchgeführt werden.

Vorteilhafterweise ist ein Verringern der ersten Geschwindigkeit oder der zweiten Geschwindigkeit vorgesehen, bevor das Stellglied einen vorgegebenen Anschlag erreicht. Dadurch wird auch bei hoher Geschwindigkeit der Anschlag mit verringerter Geschwindigkeit erreicht. Dies schont das Stellglied und den Anschlag.

Vorteilhafterweise ist die erste Geschwindigkeit in wenigstens 90% des ersten Bereichs konstant und/oder die zweite Geschwindigkeit in wenigstens 90% des zweiten Bereichs konstant. Dadurch ist die Winkelgeschwindigkeit in einem für die Kalibrierung ausreichend großen Bereich konstant. Dies vereinfacht die Kalibrierung.

Vorteilhafterweise ist das Stellglied eine Drosselklappe, und die erste Lage des Stellglieds eine Notluftlage der Drosselklappe.

Vorteilhafterweise wird die Dauer des vorgegebenen Zeitintervalls abhängig von der Dauer eines Intervalls einer Schwingung der Ausgangsgröße, insbesondere im Bereich zwischen 0 - 200 Millisekunden vorgegeben. Dadurch wird ein für die Kalibrierung besonders vorteilhaftes Zeitintervall vorgegeben.

Weitere vorteilhafte Ausgestaltungen der vorliegenden Erfindung sind in den abhängigen Ansprüchen angegeben.

### Kurzbeschreibung der Zeichnungen

Bevorzugte Ausführungsformen der vorliegenden Erfindung werden nachfolgend anhand der beigefügten Zeichnungen näher erläutert. Es zeigen:
Fig. 1 eine schematische Darstellung eines Stellgebersystems,
Fig. 2 ein Diagramm zur Veranschaulichung der Schwingung einer Ausgangsgröße eines Sensors,
Fig. 3 ein Diagramm zur Veranschaulichung einer Kalibrierung des Stellgebersystems.

### Beschreibung von Ausführungsformen

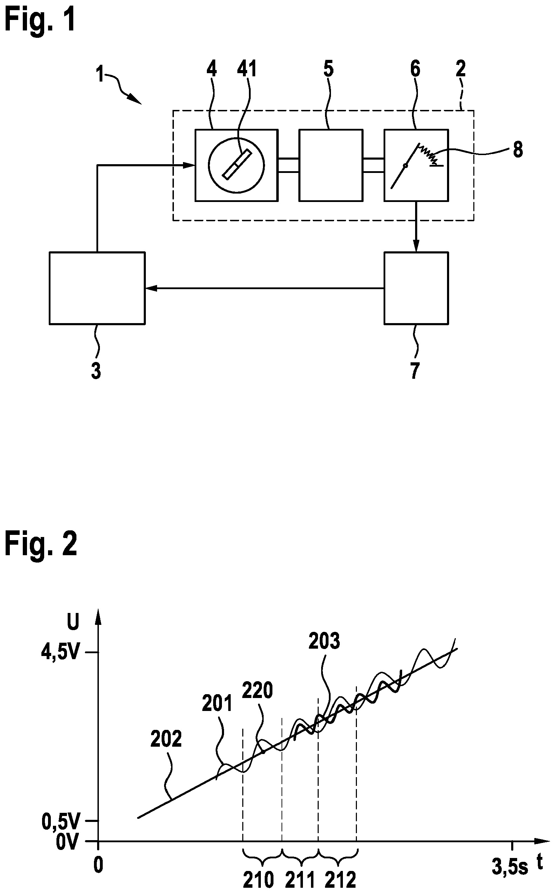

Fig. 1 zeigt ein Stellgebersystem 1 mit einem Stellgeber 2, der von einem Steuergerät 3 angesteuert wird.

Der Stellgeber 2 umfasst einen Elektromotor 4, der einen elektronisch kommutierten, d. h. bürstenlosen Elektromotor, wie z. B. einen Synchronmotor, einen Asynchronmotor oder dergleichen, aufweist. Dieser Stellantrieb 4 weist eine Abtriebswelle auf, die mit einem Getriebe 5 gekoppelt ist. Das Getriebe 5 ist weiterhin mit einem Stellglied 6 gekoppelt. Das Stellglied 6 wird, angesteuert durch das Steuergerät 3, in vorgegebene Lagen gebracht, d. h. insbesondere in vorgegebene Positionen bzw. Stellungen verfahren bzw. verstellt. Dabei wird ein Raumwinkel am Elektromotor 4 eingestellt, der einer Rotorlage des Rotors 41 zugeordnet ist. Eine Feder 8 hält das Stellglied 6 im Beispiel in einer Ruhelage.

An dem Stellglied 6 oder alternativ an dem Getriebe 5 ist ein Sensor 7 angeordnet. Mithilfe des Sensors 7 kann eine Stellbewegung bzw. eine Position des Stellglieds 6 erfasst werden. Die Position des Stellglieds 6 entspricht somit Information über die gegenwärtige Lage des Stellglieds 6. Eine Angabe über die erfasste Position des Stellglieds 6 wird an das Steuergerät 3 übermittelt. Beispielsweise kann der Sensor 7 einen GMR-Sensor (GMR: Giant Magnetic Resistance), einen Hall-Sensor oder dergleichen aufweisen. Alternativ können auch optische Verfahren angewendet werden. Als Positionsangabe kann beispielsweise eine Detektorspannung an das Steuergerät 3 bereitgestellt werden, die die Positionsangabe z. B. mithilfe eines Analog-Digital-Wandlers vor der Weiterverarbeitung digitalisiert.

Mittels einer Kennlinie wird aus der gegenwärtigen Lage des Stellglieds 6 eine gegenwärtige Lage eines Rotors 41 des Elektromotors 4 ermittelt. Diese Information wird zur Ansteuerung des Elektromotors 4 verwendet, insbesondere um eine Solllage des Stellglieds 6 einzustellen. Wie weiter oben ausgeführt ist, kann die Kennlinie durch ein Kalibrierungsverfahren bzw. ein Grundadaptionsverfahren ermittelt werden.

Derartige Stellgeber 2 werden beispielsweise in Kraftfahrzeugen eingesetzt, z. B. bei Drosselklappen, Abgasrückführungsventilen, Ladungsbewegungsklappen, elektronisch gesteuerten Kupplungen und zahlreichen ähnlichen Komponenten. Insbesondere finden derartige Stellgeber 2 dort Einsatz, wo die korrekte Stellbewegung des Stellgebers 2 funktionswesentlich ist und daher mithilfe des zusätzlichen Sensors 7 überprüft werden muss.

Die Positionsangabe des Sensors 7 ist dabei abhängig von der Ausgangsgröße des Sensors 7. Im Beispiel ändert sich die Ausgangsspannung des Sensors 7 abhängig von der vom Sensor 7 erfassten Position des Stellglieds 6.

Ungünstigerweise werden im realen System Schwingungen der tatsächlichen Rotorgeschwindigkeit angeregt. Diese führen zu Schwingungen im Ausgangssignal des Sensors 7. Die Schwingungsperiode ist abhängig von der Verfahrgeschwindigkeit und somit von der elektrischen Kreisfrequenz der Motoransteuerung.

Figur 2 zeigt ein Diagramm zur Veranschaulichung der Schwingung der Ausgangsgröße des Sensors 7, wobei die Schwingungen als Abweichung von der Ideallinie beispielsweise infolge von Motorrippeln auf das Gesamtsystem aufgeprägt werden und sich somit auch im Sensorsignal wiederfinden. Die Ausgangsgröße ist eine Sensorausgangsspannung U, beispielsweise zwischen 0,5V und 4.5V. Die Ausgangsgröße hängt von der Lage des Stellglieds 6 ab. Wie in Figur 2 dargestellt nimmt die Ausgangsgröße des Sensors 7 mit der Zeit zu. Dies entspricht einer Änderung der Lage des Stellglieds 6, die im Beispiel linear mit konstanter Geschwindigkeit erfolgen soll. Dies ist in Figur 2 als idealisierte Gerade 202 dargestellt.

Figur 2 kann beispielsweise den Durchlauf des Stellglieds 6 beim Prozess oder beim Verfahren einer Grundadaption oder einer Kalibrierung zeigen. Derartige Prozesse oder Verfahren werden beispielsweise bei Drosselklappen oder ähnlichen Stellern eingesetzt. In der Praxis steht für die Grundadaption nur ein sehr geringes Zeitbudget zur Verfügung. Das bedeutet, dass der Durchlauf für die Grundadaption in sehr kurzer Zeit, beispielsweise weniger als 3 Sekunden oder sogar nur weniger als 1,5 Sekunden, abgeschlossen sein muss. Durch den schnellen Durchlauf werden Schwingungen des Stellglieds 6 angeregt, z.B. durch Motorrippel, die dann vom Sensor 7 erfasst werden. Es kann bei der Erfassung der Datenpaare aus Raumzeiger bzw. Raumzeigerwinkel und der Position des Stellglieds 6 nicht auf das Abklingen der Schwingungen gewartet werden. Dadurch ist es möglich, dass in den zu verschiedenen Zeitpunkten erfassten Datenpaaren aus Raumzeiger oder Raumzeigerwinkel und Stellgliedposition, nicht die eigentliche idealisierte Gerade 202 erfasst wird, sondern, dass beispielsweise die Stellgliedpositionen durch die auf die idealisierten Gerade 202 aufgeprägten Schwingungen 201, 203 verfälscht sind. Mit anderen Worten kann der erfasste Wert der Stellgliedposition zu groß oder zu klein sein verglichen mit dem Idealwert, der sich bei abgeklungener Schwingung ergeben hätte. Dadurch kann die Grundadaption verfälscht werden, wodurch sich eine ungenaue Kennlinie für den späteren Betrieb des Stellglieds ergeben kann.

Figur 2 stellt den zeitlichen Verlauf 201 der Sensorausgangsspannung U abschnittsweise dar. Ebenfalls dargestellt ist ein idealer Verlauf, der der Geraden 202 entspricht. Die Sensorausgangsspannung U schwingt dabei im Beispiel periodisch um die Gerade 202 die den idealen Verlauf charakterisiert. Die Amplitude, die Frequenz und die Phasenlage der Schwingung sind abhängig vom Stellgebersystem 1 und dessen Ansteuerung. Die Schwingung setzt sich dabei aus harmonischen Schwingungsanteilen zusammen. In der Figur 2 ist die Grundschwingung 201 dargestellt und lediglich beispielhaft eine Harmonische 203 höherer Ordnung, die jedoch aufgrund der kleineren Amplitude nicht die dominante Harmonische darstellt. Die Grundschwingung 201 und vor allem die höhere Harmonische 203 sind in Figur 2 aus Gründen der Übersichtlichkeit nur abschnittsweise dargestellt.

In Figur 2 sei aus Zwecken der Veranschaulichung unterstellt, die überlagerte Schwingung entspreche im Wesentlichen der Grundschwingung 201, d.h. die höheren Harmonischen spielten keine Rolle. Dann folgt daraus, dass entlang einer Wellenlänge der Grundschwingung 201 der Motor beispielsweise eine Umdrehung des Rotors erfährt. Im weiter oben beschriebenen vereinfachten Bild ist somit innerhalb einer Wellenlänge der Grundschwingung 201 die "Kreisbahn" einmal durchlaufen worden. Beispielsweise können zur Veranschaulichung die Schnittpunkte der überlagerten Schwingung, hier näherungsweise die Grundschwingung 201 mit dem idealen Verlauf der Geraden 202 betrachtet werden. Zueinander benachbarte Schnittpunkte weisen daher unabhängig von der Verfahrgeschwindigkeit gleiche Abstände auf der Y-Achse auf, die die Ist-Position des Stellglieds 6 und damit indirekt auch die Rotorlage beschreibt. Der Rotor 41 ist über das Getriebe 5 fest mit dem Stellglied 6 gekoppelt.

Die Frequenz derjenigen Harmonischen mit der größten Amplitude kennzeichnet dabei eine dominante harmonische Schwingung als charakteristische Eigenschaft des Elektromotors 4. Weisen mehrere Harmonischen ähnlich hohe Amplituden auf, so kann man auch von mehreren dominanten Harmonischen sprechen. Die Grundschwingung 201 mit einer Frequenz f kann als erste Harmonische bezeichnet werden. Die Grundschwingung 201 weist dabei die längste Wellenlänge auf, d.h. die größten Abstände entlang der Y-Achse zwischen aufeinanderfolgenden Perioden. Jedoch ist auch im Zeitraum, d.h. entlang der X-Achse der Figur 2 das Zeitintervall zum Durchlaufen einer Periode der Grundschwingung länger als das Zeitintervall zum Durchlaufen einer Periode der zweite Harmonischen mit der Frequenz 2^{∗}f, dieses ist länger als das Zeitintervall zum Durchlaufen einer Periode der dritten Harmonischen mit der Frequenz 3^{∗}f, usw. Im Beispiel weist die Grundschwingung 201 die größte Amplitude auf. Die Grundschwingung 201 bestimmt damit in diesem Beispiel im Wesentlichen die periodische Störung. Im Beispiel ist wegen der nur geringen Amplitude der zweiten Harmonischen 203 der zeitliche Verlauf der Sensorausgangsspannung U gegenüber dem idealen Verlauf 202 annährend identisch mit der Grundschwingung 201.

Konstruktionsbedingt ist für das Stellgebersystem 1 mit bekanntem Elektromotor 4 als Charakteristik des Elektromotors 4 die Wellenlänge der dominanten harmonischen Schwingung der Ausgangsgröße des Sensors 7 bestimmt. Die Frequenzen und damit die Wellenlängen der angeregten Schwingungen können beispielsweise konstruktionsbedingt vorgegeben sein, so dass auch eine Vielzahl von gefertigten Stellgliedern 6 einer Serie immer dieselbe dominante harmonische Schwingung aufweist. Im Bild der oben beschriebenen Kreisbahn ist konstruktionsbedingt festgelegt, wie viele "Unebenheiten" die Kreisbahn aufweist, welche Höhe die "Unebenheiten" aufweisen und in welchem Abstand sie zueinander angeordnet sind.

Um die Fehler in der Ansteuerung zu vermeiden, wird die Kennlinie, die der Ausgangsgröße des Sensors 7 den Istwert des Rotors 41, also die Rotorlage, des Elektromotors 4 zuordnet, kalibriert oder erstellt. Dies erfolgt bei der Kalibrierung oder der Grundadaption.

Dazu ist das Steuergerät 3 ausgebildet, diese Kennlinie nach der Kalibrierung oder der Grundadaption zur Ansteuerung des Elektromotors 4 zu verwenden.

Im Beispiel sind in Figur 2 mehrere Sektoren 210, 211, 212 als aufeinanderfolgende Zeitintervalle dargestellt. Die Wellenlänge eines Vielfachen der Grundschwingung 201 der Ausgangsgröße des Sensors 7, insbesondere der dominanten harmonischen Schwingung, hier der Grundschwingung 201, bestimmt dabei die zeitliche Länge der Sektoren 210, 211, 212, d.h. des Zeitintervalls auf der X-Achse. Zeitintervalle dauern beispielsweise 100 Millisekunden. Die Dauer des vorgegebenen Zeitintervalls ist abhängig von der Dauer eines Intervalls einer Schwingung der Ausgangsgröße, insbesondere im Beispiel zwischen 0 bis 200 Millisekunden vorgegeben.

Ein Stützpunkt 220 für die Kennlinie ist in Figur 2 im Sektor 210 dargestellt. Idealerweise liegt der Stützpunkt, wie in Figur 2 dargestellt, auf dem idealen Verlauf 202. Der Abstand der Stützpunkte wird beispielsweise konstant vorgegeben. Der Abstand beträgt beispielsweise 100 Millisekunden.

Wie weiter oben beschrieben wurde kann durch die Erfassung dieser Datenpaare dann unter Verwendung von mathematischen Zusammenhängen oder durch modellbasierte Berechnung mit dem herkömmlichen Verfahren, wie in Figur 2 dargestellt, eine Kennlinie ermittelt werden, die der Lage des Stellglieds 6 einen Drehwinkel des Raumzeigers und somit eine Lage des Rotors 41 des Elektromotor 4 zuordnet. Mit dieser Kennlinie wird das Stellgebersystem 1 kalibriert, d.h. die Kennlinie wird im Steuergerät 3 abgespeichert und zur Ansteuerung des Elektromotors 4 verwendet.

Dadurch wird der negative Einfluss der Schwingungen auf die Kennlinie vermindert.

Die Schwingungen können jedoch ungünstigerweise umso stärker sein, je schneller der Verfahrweg des Rotors 41 bzw. des Stellglieds 6 im gesteuerten Betrieb durchlaufen wird.

Bei der gewünschten kurzen Zeit, die zur Kalibrierung insbesondere in Kraftfahrzeugen, zur Verfügung steht, treten somit beim Erlernen der Stützstellen Fehler auf.

Diese Fehler werden durch das im Folgenden beschriebene Verfahren minimiert.

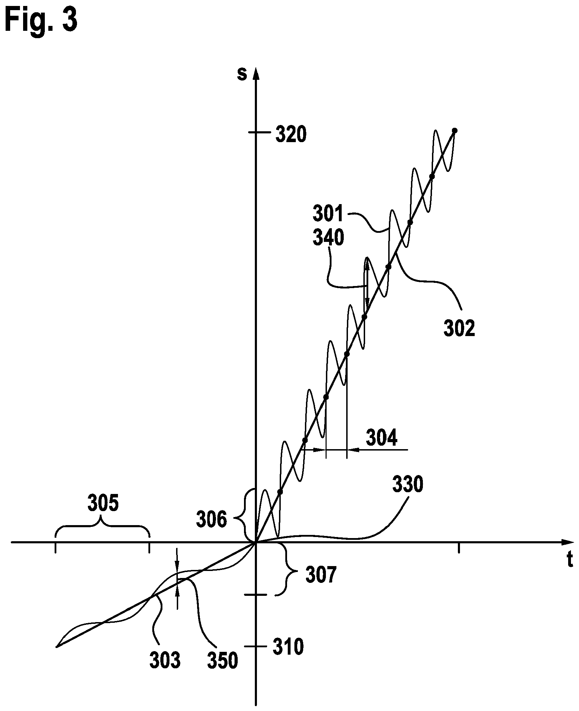

Der Stützpunkt 220 wird dabei durch ein in Figur 3 schematisch dargestelltes Verfahren zur Kalibrierung des Stellgebersystems 1 ermittelt, bei dem mindestens zwei Werte der Ausgangsgröße des Sensors 7 zur Bestimmung der Position des Stellglieds 6 erfasst werden.

Solange die Amplituden gering sind, was insbesondere bei kleinen Verfahrgeschwindigkeiten der Fall ist, führen die Schwingungen geringer Amplitude zu kleinen Verfälschungen. Bei höheren Verfahrgeschwindigkeiten kommt es jedoch zu Schwingungen mit erheblich größerer Amplitude, die zu großen Verfälschungen führen. Ein verbessertes Verfahren zum Bestimmen von Stützstellen wird anhand Figur 3 beschrieben.

Figur 3 stellt den zeitlichen Verlauf 301 der Position S des Stellglieds 6 dar. Dieser entspricht dem zeitlichen Verlauf der Ausgangsgröße des Sensors 7, d.h. der Sensorausgangsspannung U. Ein idealer Verlauf ist in einem ersten Bereich als erste Gerade 302 mit einer ersten Steigung und in einem zweiten Bereich als zweite Gerade 303 mit einer zweiten Steigung dargestellt.

Im ersten Bereich weist der zeitliche Verlauf 301, entlang der X-Achse betrachtet, der Position des Stellglieds 6 eine erste Periode 304 auf. Im zweiten Bereich weist der zeitliche Verlauf 301 der Position des Stellglieds 6 eine zweite Periode 305 auf, die im Beispiel länger ist als die erste Periode 304.

Der erste Bereich, rechts von der Y-Achse, ist dabei räumlich gesehen, d.h. in Richtung der Y-Achse, länger als der zweite Bereich. Im Bild der "Kreisbahn" muss die Kreisbahn im ersten Bereich häufiger durchlaufen werden, als im zweiten Bereich. Für das Durchfahren des ersten Bereichs und des zweiten Bereichs im Rahmen der Kalibrierung steht nur ein begrenztes Zeitbudget zur Verfügung.

Im ersten Bereich weist der Verlauf 301 der Position des Stellglieds 6 eine erste Wellenlänge 306 entlang der Y-Achse auf. Im zweiten Bereich weist der Verlauf 301 der Position des Stellglieds 6 eine zweite Wellenlänge 307 entlang der Y-Achse auf, die im Beispiel gleich groß ist wie die erste Wellenlänge 306, da sie im Beispiel dieselbe dominante Harmonische aufweisen.

Die Amplitude der Schwingung im ersten Bereich ist dabei aufgrund der höheren Verfahrgeschwindigkeit höher als die Amplitude der Schwingung im zweiten Bereich, d.h. links von der Y-Achse. Die Unterschiede der Verfahrgeschwindigkeiten sind in der Figur durch die unterschiedlichen Steigungen der idealen Kurven 302, 303 gut zu erkennen. In Figur 3 ist die Amplitude im ersten Bereich mit 340 bezeichnet. In Figur 3 ist die Amplitude im zweiten Bereich mit 350 bezeichnet.

Es ist nun das Ziel, beim Ermitteln der Wertepaare, d.h. der Raumzeigerposition oder Zeit auf der X-Achse und der Ist-Position des Stellglieds 6 auf der Y-Achse, den Einfluss der Schwingungen beim schnellen Durchlaufen des ersten Bereichs, d.h. rechts von der Y-Achse, zu verringern. Dies wird dadurch erreicht, dass für eine Stützstelle nicht lediglich punktuell wie in Figur 2 eine Ist-Position des Stellglieds 6 erfasst wird. Vielmehr wird jeder Stützstelle ein Zeitintervall 304 zugeordnet, das die Stützstelle vorzugsweise umfasst. Dabei ergibt sich die Breite des Zeitintervalls als diejenige Breite oder Zeitlänge, die der Wellenlänge der dominanten Harmonischen der Schwingung entspricht. Mit anderen Worten ist das Zeitintervall so breit, bis auf der Y-Achse betrachtet die dominante Harmonische eine Periode zurückgelegt hat. Innerhalb des Zeitintervalls 304 werden nun wenigstens zwei Werte der Ist-Position des Stellglieds 6 erfasst. Diese wenigstens zwei Werte werden anschließend miteinander verrechnet, beispielsweise arithmetisch gemittelt. Dieser verrechnete Wert wird dann der Stützstelle zugeordnet, die dem Zeitintervall zugeordnet ist und vorzugsweise in dem Zeitintervall liegt.

Beispielsweise wird der ursprünglich im Zeitpunkt 500ms ermittelte Positionswert eines Stellglieds 6 ersetzt durch einen Wert, der sich aus mehreren Positionen des Stellglieds 6 ergibt, die sich in einem Zeitintervall z.B. von 470ms bis 530ms ergeben. Beispielsweise werden 6 Positionen des Stellglieds 6 zu den Zeitpunkten 475ms, 485ms, 495ms, 505ms, 515ms und 525ms ermittelt. Diese 6 Positionswerte werden beispielsweise arithmetisch gemittelt einem Mittelwert zugeordnet. Dieser Mittelwert wird dann als Stellgliedsposition der Stützstelle für 500ms zugeordnet. Die Intervallbreite, hier lediglich beispielhaft 60ms, wird dabei beispielsweise vorgegeben durch die Wellenlänge der dominanten Harmonischen der aufgeprägten Schwingung, so dass eine komplette Wellenlänge der dominanten Harmonischen durch das Zeitintervall "abgetastet" wird. Es können jedoch auch erheblich mehr Werte ermittelt werden, um zu dem Verrechnungswert zu gelangen. Je mehr Werte innerhalb des Zeitintervalls 304 erfasst werden, desto weniger weicht der verrechnete Wert von der idealen Kurve 302 ab. Dabei sind die im Zeitintervall erfassten Werte bevorzugt gleichmäßig über das Zeitintervall verteilt, beispielsweise äquidistant beabstandet.

Es kann nun sein, dass der zweite Bereich derart klein ist, beispielsweise bei einer Drosselklappe der Bereich vom Notluftpunkt bis zur vollständig geschlossenen Stellung, dass beim eben beschriebenen Verfahren zu wenige Stützstellen erfassbar wären, um ein ausreichend genaues und dichtes Kennfeld oder eine ausreichend genaue und dichte Kennlinie zu erhalten. Im dargestellten Beispiel der Figur 3 wären nur 2 Intervalle erfassbar.

Es kann daher vorgesehen werden, in dem kürzeren Bereich die Verfahrgeschwindigkeit ausreichend langsam zu wählen, so dass die Amplituden der Schwingung gering ausfallen und somit mit dem herkömmlichen Verfahren wie es in Figur 2 beschrieben wurde eine ausreichende Genauigkeit erzielbar ist. Mit anderen Worten: die Schwingungen sind so klein, dass die Wertepaare nicht signifikant von der Ideallinie abweichen. Dann kann im zweiten Bereich eine hohe Anzahl von punktuell erfassten Stützstellen erfasst werden, die den Genauigkeitsanforderungen für die daraus zu bestimmende Kennlinie genügen.

Um nun mit dem Zeitbudget für die Kalibrierung auszukommen muss daher nun der erste, längere Bereich, schneller durchfahren werden. In diesem längeren Bereich, beispielsweise vom Notluftpunkt bis zum Zustand einer vollständig geöffneten Drosselklappe, ist ein etwas größerer Abstand zwischen den Wertepaaren, entlang der X-Achse betrachtet, weniger kritisch. Daher kann hier das oben beschriebene Verfahren mit der Erfassung mehrerer Werte in den Zeitintervallen um die gewünschten Stützstellen herum angewendet werden.

Der zeitliche Ablauf der Grundadaption oder der Kalibrierung wird nun am Beispiel der Figur 3 beschrieben.

Der Elektromotors 4 wird in einem ersten Betriebszustand des Elektromotors 4 zur Bewegung des Stellglieds 6 mit einer vorgegebenen ersten Geschwindigkeit und in einem zweiten Betriebszustand des Elektromotors 4 zur Bewegung des Stellglieds 6 mit einer vorgegebenen zweiten Geschwindigkeit angesteuert.

Dabei ist die vorgegebene erste Geschwindigkeit höher, als die vorgegebene zweite Geschwindigkeit. Dementsprechend weist die erste Gerade 302 eine der ersten Geschwindigkeit entsprechende höhere Steigung auf, als die zweite Gerade 303, deren Steigung der zweiten Geschwindigkeit entspricht.

Der Elektromotor 4 wird abhängig von der Information über die Position des Stellglieds 6 zum Betrieb im ersten Betriebszustand oder im zweiten Betriebszustand angesteuert.

Durch das Verfahren zur Kalibrierung des Stellgebersystems 1 werden die Einflüsse der Schwingungen auf die Kennlinie vermieden.

Durch die Ansteuerung des Elektromotors 4 ist die Lage des Stellglieds 6 einstellbar. Dabei wird die Lage des Stellglieds 6 vorzugsweise im ersten Betriebszustand des Elektromotors 4 in einem ersten Bereich verändert. Der erste Bereich ist durch einen vorgegebenen ersten Anschlag 320 für das Stellglied 6 und eine davon verschiedene vorgegebenen erste Lage 330 des Stellglieds 6 begrenzt.

Vorzugsweise wird die Lage des Stellglieds 6 im zweiten Betriebszustand des Elektromotors 4 in einem zweiten Bereich verändert. Der zweite Bereich ist durch einen vorgegebenen zweiten Anschlag 310 für das Stellglied 6 und die davon verschiedene vorgegebenen erste Lage 330 des Stellglieds 6 begrenzt.

Im Beispiel wird das Stellglied 6 beim Beginn des Verfahrens in einem Vorbereitungsschritt an den zweiten Anschlag 310 gebracht. Der zweite Anschlag 310 ist beispielsweise der Anschlag der Drosselklappe, wenn diese vollständig geschlossen ist, bzw. ihre kleinstmögliche Öffnung aufweist. Dies ist beispielsweise der vollständig geschlossene Zustand einer Drosselklappe eines Kraftfahrzeugs. Die vorgegebene erste Lage 330 ist in diesem Fall eine Ruhelage der Drosselklappe, beispielsweise ein Notluftpunkt. Diese wird beispielsweise durch eine Feder oder zwei Federn eingestellt, die die Drosselklappe in einer Notlauflage halten.

Für das eigentliche Durchführen der Kalibrierung bzw. Grundadaption wird dann beispielsweise der Elektromotor 4 zuerst in den zweiten Betriebszustand geschaltet. Das Stellglied 6 wird dabei beispielsweise ausgehend vom zweiten Anschlag 310 mit der ersten vorgegebenen Geschwindigkeit so bewegt, dass das Stellglied 6 im zweiten Bereich vom zweiten Anschlag 310 auf die vorgegebene erste Lage 330 zu bewegt wird, beispielsweise zum Notluftpunkt. Dadurch ändert sich die Lage des Stellglieds 6 im zweiten Bereich. Der Sensor 7 erfasst die aktuelle Position des Stellglieds 6 und gibt eine entsprechende Ausgangsgröße aus. Der zweite Betriebszustand wird beibehalten, bis der zweite Bereich durchfahren ist. Im Beispiel, bis die Drosselklappe die Notluftlage, d.h. die erste Lage 330, erreicht.

Die Ist-Position des Stellglieds 6 und damit auch die Ausgangsgröße des Sensors 7 schwingt dabei beispielsweise mit einer ersten Harmonischen, d.h. einer Grundfrequenz, und einer oder mehreren weiteren Harmonischen, d.h. Oberschwingungen. Daraus resultiert eine überlagerte Schwingung des Ausgangssignals des Sensors 7. Dies entspricht dem in Figur 3 dargestellten zeitlichen Verlauf 301 der Position S des Stellglieds 6. Der zeitliche Verlauf 301 umfasst dabei in der Figur den Verfahrbereich vom zweiten Anschlag 310, in der Figur 3 links unten, bis zum ersten Anschlag 320, in der Figur 3 rechts oben.

Die Position des Stellglieds 6 wird wie zuvor beschrieben vom Sensor 7 erfasst. Der Elektromotor 4 wird abhängig von der erfassten Position zum Betrieb im ersten Betriebszustand oder im zweiten Betriebszustand angesteuert. Die Ansteuerung erfolgt beispielsweise modellbasiert. Im Falle der Drosselklappe wird beispielsweise eine Solllage abhängig von einem Modell vorgegeben, das den Elektromotor 4, das Getriebe 5 und eine Federkonstante für die Feder 8 berücksichtigt.

Wie oben beschrieben wurde kann der zweite, kurze Bereich vergleichsweise langsam durchfahren werden, so dass die Amplituden der Schwingung nur sehr gering ausgeprägt sind. Daher kann hier beispielsweise das herkömmliche Verfahren mit einer Erfassung von Wertepaaren aus Raumzeigerposition und Ist-Position des Stellglieds verwendet werden. Die Wertepaare können eng bzw. dicht zueinander angeordnet werden, um auf diese Weise eine Kennlinie mit genügend Punkten im zweiten Bereich zu erstellen. Durch die geringen Amplituden weichen die ermittelten Wertepaare nur gering von der Ideallinie ab, so dass die Kennlinie nicht allzu stark verfälscht wird.

Danach muss der erste, längere Bereich durchfahren werden.

Dazu wird nun der Elektromotor 4 in den ersten Betriebszustand geschaltet. Das Stellglied 6 wird dabei beispielsweise ausgehend von der Ruhelage 330 mit der ersten vorgegebenen Geschwindigkeit, beispielsweise größer als die zweite Geschwindigkeit, so bewegt, dass das Stellglied 6 im ersten Bereich von der Ruhelage 330 auf den ersten Anschlag 320 zu bewegt wird. Dadurch ändert sich die Lage des Stellglieds 6 im ersten Bereich. Der Sensor 7 erfasst die aktuelle Position des Stellglieds 6 und gibt eine entsprechende Ausgangsgröße aus.

Die resultierende überlagerte Schwingung wird wie oben beschrieben vom Steuergerät 3 ausgewertet.

Vorzugsweise wird die Information über die Position des Stellglieds 6 in mindestens einem vorgegebenen Zeitintervall durch eine Mittelwertbildung über mehrere Messwerte ermittelt, die in dem mindestens einen vorgegebenen Zeitintervall gemessen wurden.

Vorzugsweise sind während die Lage im ersten Bereich verändert wird, in mindestens 50%, vorzugsweise mindestens 60% des ersten Bereichs Zeitpunkte zur Erfassung von Messwerten durch den Sensor 7 vorgesehen. Die Stützstellen sind vorzugsweise in mindestens 50% vorzugsweise mindestens 60% des ersten Bereichs angeordnet. Im Bereich außerhalb des Bereichs, der zur Bestimmung der Kennlinie verwendet wird, kann eine Veränderung der Geschwindigkeit vorgesehen sein.

Durch das beschriebene Vorgehen wird der Fehler, der auf den Einfluss der Schwingungsanteile zurückzuführen ist minimiert.

Vorzugsweise wird die erste Geschwindigkeit oder die zweite Geschwindigkeit konstant gewählt. Die Geschwindigkeit kann auch zunehmend oder abnehmend gewählt werden. Vorzugsweise ist ein Verringern der ersten Geschwindigkeit oder der zweiten Geschwindigkeit vorgesehen, bevor das Stellglied 6 einen der vorgegebenen Anschläge erreicht. Die erste Geschwindigkeit und die zweite Geschwindigkeit werden dabei so gewählt, dass der gesamte Stellbereich in vorgegebener Zeit durchfahren wird. Die erste Geschwindigkeit wird dabei größer als die zweite Geschwindigkeit gewählt. Beispielsweise wird ein gesamter Stellbereich einer Drosselklappe in drei Sekunden durchfahren.

Die Reihenfolge in der der erste Bereich oder der zweite Bereich durchfahren werden ist grundsätzlich beliebig. Die Messung kann sowohl bei der Bewegung des Stellglieds 6 vom jeweiligen Anschlag zur Ruhelage oder von der Ruhelage zum jeweiligen Anschlag erfolgen.

## Patentansprüche

1. Verfahren zur Kalibrierung eines Stellgebersystems umfassend einen bürstenlosen Elektromotor (4) zur Beeinflussung einer Lage eines Stellglieds (6),
wobei mindestens zwei Werte einer Ausgangsgröße eines Sensors (7) zur Bestimmung einer Position des Stellglieds (6) erfasst werden,
eine Information über die Position des Stellglieds (6) abhängig von den mindestens zwei erfassten Werten ermittelt wird,
die ermittelte Information über die Position des Stellglieds (6) einer Information über eine Rotorlage des Elektromotors (4) zugeordnet wird, wobei die mindestens zwei erfassten Werte zu zwei verschiedenen Zeitpunkten in einem vorgegebenen Zeitintervall erfasst werden,
wobei eine Dauer des vorgegeben Zeitintervalls abhängig von einer Charakteristik des Elektromotors (4) bestimmt ist,
wobei die Dauer des Zeitintervalls abhängt von der Wellenlänge einer beim Ansteuern des Rotors auftretenden periodisch oszillierenden Schwingung.

2. Verfahren nach Anspruch 1, **dadurch gekennzeichnet, dass** der Elektromotor (4) in einem ersten Betriebszustand des Elektromotors (4) zur Bewegung des Stellglieds (6) mit einer vorgegebenen ersten Geschwindigkeit und in einem zweiten Betriebszustand des Elektromotors (4) zur Bewegung des Stellglieds (6) mit einer vorgegebenen zweiten Geschwindigkeit angesteuert wird, wobei die vorgegebene erste Geschwindigkeit höher ist als die vorgegebene zweite Geschwindigkeit, und der Elektromotor (4) abhängig von der Information über die Position des Stellglieds (6) zum Betrieb im ersten Betriebszustand oder im zweiten Betriebszustand angesteuert wird.

3. Verfahren nach einem der vorherigen Ansprüche, **dadurch gekennzeichnet, dass** die Information über die Position des Stellglieds (6) in mindestens einem vorgegebenen Zeitintervall durch eine Mittelwertbildung über mehrere Messwerte ermittelt wird, die in dem mindestens einen vorgegebenen Zeitintervall gemessen wurden.

4. Verfahren nach einem der Ansprüche 1 bis 3, **dadurch gekennzeichnet, dass** der Rotor mit gleichförmiger Winkelgeschwindigkeit angesteuert wird.

5. Verfahren nach einem der vorhergehenden Ansprüche und Anspruch 2, **dadurch gekennzeichnet, dass** durch die Ansteuerung des Elektromotors (4) eine Lage des Stellglieds (6) einstellbar ist, wobei die Lage des Stellglieds (6) im ersten Betriebszustand des Elektromotors (4) in einem ersten Bereich verändert wird, der durch einen vorgegebenen ersten Anschlag (320) für das Stellglied (6) und eine davon verschiedene vorgegebenen erste Lage (330) des Stellglieds (6) begrenzt ist.

6. Verfahren nach Anspruch 5, **dadurch gekennzeichnet, dass**, während die Lage im ersten Bereich verändert wird, in mindestens 50%, insbesondere mindestens 60%, des ersten Bereichs Zeitpunkte zur Erfassung von Messwerten durch den Sensor (7) vorgesehen sind.

7. Verfahren nach einem der Ansprüche 5 oder 6, **dadurch gekennzeichnet, dass** die Lage des Stellglieds (6) im zweiten Betriebszustand des Elektromotors (4) in einem zweiten Bereich verändert wird, der durch einen vorgegebenen zweiten Anschlag (310) für das Stellglied (6) und die davon verschiedene vorgegebene erste Lage (330) des Stellglieds (6) begrenzt ist.

8. Verfahren nach einem der vorherigen Ansprüche und Anspruch 2, **dadurch gekennzeichnet, dass** ein Verringern der ersten Geschwindigkeit oder der zweiten Geschwindigkeit vorgesehen ist, bevor das Stellglied (6) einen vorgegebenen Anschlag erreicht.

9. Verfahren nach einem der vorherigen Ansprüche und Anspruch 2, **dadurch gekennzeichnet, dass** die erste Geschwindigkeit in wenigstens 90% des erstens Bereichs konstant ist
und/oder
dass die zweite Geschwindigkeit in wenigstens 90% des zweiten Bereichs konstant ist.

10. Verfahren nach einem der Ansprüche 5 bis 9, **dadurch gekennzeichnet, dass** das Stellglied (6) eine Drosselklappe ist, und die erste Lage des Stellglieds (6) einen Notluftlage der Drosselklappe ist.

11. Verfahren nach einem der vorherigen Ansprüche, **dadurch gekennzeichnet, dass** die Dauer des vorgegebenen Zeitintervalls abhängig von der Dauer eines Intervalls einer Schwingung der Ausgangsgröße, insbesondere im Bereich zwischen 0 - 200 Millisekunden vorgegeben wird.

12. Kalibriersystem für einen Stellgeber der einen bürstenlosen Elektromotor (4) umfasst, welcher ausgebildet ist eine Lage eines Stellglieds (6) abhängig von einer vorgebbaren Rotorlage des Elektromotors (4) zu beeinflussen, das Kalibriersystem zusätzlich umfassend ein Steuergerät (3), das ausgebildet ist mindestens zwei Werte einer Ausgangsgröße eines Sensors (7) zur Bestimmung der Position des Stellglieds (6) zu erfassen, eine Information über eine Position des Stellglieds (6) abhängig von den mindestens zwei erfassten Werten zu ermitteln, die ermittelte Information über die Position des Stellglieds (6) einer Information über eine Rotorlage des Elektromotors (4) zuzuordnen, wobei die mindestens zwei erfassten Werte zu zwei verschiedenen Zeitpunkten in einem vorgegebenen Zeitintervall erfasst werden, und wobei eine Dauer des vorgegeben Zeitintervalls abhängig von einer Charakteristik des Elektromotors (4) bestimmt ist,
wobei die Dauer des Zeitintervalls abhängt von der Wellenlänge einer beim Ansteuern des Rotors auftretenden periodisch oszillierenden Schwingung.

13. Computerprogrammprodukt, das einen Programmcode enthält, der, wenn er auf einer Datenverarbeitungseinheit ausgeführt wird, das Verfahren nach einem der Ansprüche 1 bis 11 durchführt.

## Claims

1. Method for calibrating a positioner system comprising a brushless electric motor (4) for influencing a position of an actuating element (6),
wherein at least two values of an output variable of a sensor (7) are recorded for determining a position of the actuating element (6),
an item of information relating to the position of the actuating element (6) is ascertained depending on the at least two recorded values,
the ascertained item of information relating to the position of the actuating element (6) is assigned to an item of information relating to a rotor position of the electric motor (4),
wherein the at least two recorded values are recorded at two different times in a prespecified time interval, wherein a duration of the prespecified time interval is determined depending on a characteristic of the electric motor (4),
wherein the duration of the time interval depends on the wavelength of a periodic oscillation which occurs during activation of the rotor.

2. Method according to Claim 1, **characterized in that** the electric motor (4) is activated at a prespecified first speed for moving the actuating element (6) in a first operating state of the electric motor (4) and at a prespecified second speed for moving the actuating element (6) in a second operating state of the electric motor (4), wherein the prespecified first speed is higher than the prespecified second speed, and the electric motor (4) is activated for operation in the first operating state or in the second operating state depending on the item of information relating to the position of the actuating element (6).

3. Method according to either of the preceding claims, **characterized in that** the item of information relating to the position of the actuating element (6) is ascertained in at least one prespecified time interval by averaging over several measurement values which were measured in the at least one prespecified time interval.

4. Method according to one of Claims 1 to 3, **characterized in that** the rotor is activated at a uniform angular velocity.

5. Method according to one of the preceding claims and Claim 2, **characterized in that** a position of the actuating element (6) can be set by activating the electric motor (4), wherein the position of the actuating element (6) is changed in the first operating state of the electric motor (4) in a first region which is delimited by a prespecified first stop (320) for the actuating element (6) and a prespecified first position (330) of the actuating element (6), which first position is different from the said first stop.

6. Method according to Claim 5, **characterized in that**, while the position is changed in the first region, times for recording measurement values using the sensor (7) are provided in at least 50%, in particular at least 60%, of the first region.

7. Method according to either of Claims 5 and 6, **characterized in that** the position of the actuating element (6) is changed in the second operating state of the electric motor (4) in a second region which is delimited by a prespecified second stop (310) for the actuating element (6) and the prespecified first position (330) of the actuating element (6) which is different from the said second stop.

8. Method according to one of the preceding claims and Claim 2, **characterized in that** a reduction in the first speed or the second speed is provided before the actuating element (6) reaches a prespecified stop.

9. Method according to one of the preceding claims and Claim 2, **characterized in that** the first speed is constant in at least 90% of the first region,
and/or
**in that** the second speed is constant in at least 90% of the second region.

10. Method according to one of Claims 5 to 9, **characterized in that** the actuating element (6) is a throttle valve, and the first position of the actuating element (6) is an emergency-air position of the throttle valve.

11. Method according to one of the preceding claims, **characterized in that** the duration of the prespecified time interval is prespecified depending on the duration of an interval of an oscillation of the output variable, in particular in the range of between 0-200 milliseconds.

12. Calibration system for a positioner which comprises a brushless electric motor (4) which is designed to influence a position of an actuating element (6) depending on a prespecifiable rotor position of the electric motor (4), the calibration system additionally comprising a controller (3) which is designed to record at least two values of an output variable of a sensor (7) for determining the position of the actuating element (6), to ascertain an item of information relating to a position of the actuating element (6) depending on the at least two recorded values, and to assign the ascertained item of information relating to the position of the actuating element (6) to an item of information relating to a rotor position of the electric motor (4), wherein the at least two recorded values are recorded at two different times in a prespecified time interval, and wherein a duration of the prespecified time interval is determined depending on a characteristic of the electric motor (4),
wherein the duration of the time interval depends on the wavelength of a periodic oscillation which occurs during activation of the rotor.

13. Computer program product which comprises program code which, when executed on a data processing unit, carries out the method according to one of Claims 1 to 11.

## Revendications

1. Procédé d'étalonnage d'un système d'actionneur comprenant un moteur électrique sans balais (4) pour influer sur une position d'un actionneur (6),
au moins deux valeurs d'une grandeur de sortie d'un capteur (7) étant acquises pour déterminer une position de l'actionneur (6), une information sur la position de l'actionneur (6) étant déterminée en fonction des au moins deux valeurs acquises, l'information déterminée sur la position de l'actionneur (6) étant associée à une information sur la position du rotor du moteur électrique (4), les au moins deux valeurs acquises étant acquises à deux instants différents dans un intervalle de temps prédéterminé,
une durée de l'intervalle de temps prédéterminé étant déterminée en fonction d'une caractéristique du moteur électrique (4),
la durée de l'intervalle de temps dépendant de la longueur d'onde d'une oscillation oscillant périodiquement qui se produit lors de l'excitation du rotor.

2. Procédé selon la revendication 1, **caractérisé en ce que** le moteur électrique (4) est excité, dans un premier état de fonctionnement du moteur électrique (4), pour déplacer l'actionneur (6) à une première vitesse prédéterminée et, dans un deuxième état de fonctionnement du moteur électrique (4), pour déplacer l'actionneur (6) à une deuxième vitesse prédéterminée, la première vitesse prédéterminée étant supérieure à la deuxième vitesse prédéterminée, et le moteur électrique (4) étant excité en fonction de l'information sur la position de l'actionneur (6) pour fonctionner dans le premier état de fonctionnement ou dans le deuxième état de fonctionnement.

3. Procédé selon l'une des revendications précédentes, **caractérisé en ce que** l'information sur la position de l'actionneur (6) est déterminée dans au moins un intervalle de temps prédéterminé par formation de la moyenne sur plusieurs valeurs de mesure qui ont été mesurées dans l'au moins un intervalle de temps prédéterminé.

4. Procédé selon l'une des revendications 1 à 3, **caractérisé en ce que** le rotor est excité à une vitesse angulaire uniforme.

5. Procédé selon l'une des revendications précédentes et la revendication 2, **caractérisé en ce qu'**une position de l'actionneur (6) peut être réglée par excitation du moteur électrique (4), la position de l'actionneur (6) étant modifiée dans le premier état de fonctionnement du moteur électrique (4) dans une première zone qui est délimitée par une première butée prédéterminée (320) destinée à l'actionneur (6) et une première position prédéterminée (330), différente de celle-ci, de l'actionneur (6).

6. Procédé selon la revendication 5, **caractérisé en ce que**, tandis que la position est modifiée dans la première zone, des instants sont prévus pour l'acquisition de valeurs de mesure par le capteur (7) dans au moins 50 %, en particulier au moins 60 %, de la première zone.

7. Procédé selon l'une des revendications 5 et 6, **caractérisé en ce que** la position de l'actionneur (6) dans le deuxième état de fonctionnement du moteur électrique (4) est modifiée dans une deuxième zone qui est délimitée par une deuxième butée prédéterminée (310) destinée à l'actionneur (6) et la première position prédéterminée (330), différente de celle-ci, de l'actionneur (6).

8. Procédé selon l'une des revendications précédentes et la revendication 2, **caractérisé en ce qu'**une réduction de la première vitesse ou de la deuxième vitesse est prévue avant que l'actionneur (6) n'atteigne une butée prédéterminée.

9. Procédé selon l'une des revendications précédentes et la revendication 2, **caractérisé en ce que** la première vitesse est constante dans au moins 90 % de la première plage
et/ou
**en ce que** la deuxième vitesse est constante dans au moins 90 % de la deuxième plage.

10. Procédé selon l'une des revendications 5 à 9, **caractérisé en ce que** l'actionneur (6) est un clapet d'étranglement, et la première position de l'actionneur (6) est une position d'air de secours du clapet d'étranglement.

11. Procédé selon l'une des revendications précédentes, **caractérisé en ce que** la durée de l'intervalle de temps prédéterminé est prédéterminée en fonction de la durée d'un intervalle d'oscillation de la grandeur de sortie, notamment dans la plage comprise entre 0 et 200 millisecondes.

12. Système d'étalonnage d'un actionneur comprenant un moteur électrique sans balais (4) qui est conçu pour influer sur une position d'un actionneur (6) en fonction d'une position prédéterminable du rotor du moteur électrique (4), le système d'étalonnage comprenant en outre une unité de commande (3) qui est conçue pour acquérir au moins deux valeurs d'une grandeur de sortie d'un capteur (7) afin de déterminer la position de l'actionneur (6), pour déterminer une information sur une position de l'actionneur (6) en fonction des au moins deux valeurs acquises, pour associer l'information déterminée sur la position de l'actionneur (6) à une information sur une position de rotor du moteur électrique (4), les au moins deux valeurs acquises étant acquises à deux instants différents dans un intervalle de temps prédéterminé, et une durée de l'intervalle de temps prédéterminé étant déterminée en fonction d'une caractéristique du moteur électrique (4), la durée de l'intervalle de temps dépendant de la longueur d'onde d'une oscillation oscillant périodiquement qui se produit lors de l'excitation du rotor.

13. Progiciel qui contient un code de programme qui, lorsqu'il est exécuté sur une unité de traitement de données, met en œuvre le procédé selon l'une des revendications 1 à 11.
